(19)

Europäisches Patentamt
European Patent Office
Office européen des brevets

(11) **EP 1 258 978 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(51) Int Cl.:
**H02M 3/337** (2006.01)

(21) Anmeldenummer: **02100488.2**

(22) Anmeldetag: **14.05.2002**

(54) **Stromversorgungssystem**

Current supply system

Système d'alimentation en courant

(84) Benannte Vertragsstaaten:
**DE FR GB**

(30) Priorität: **16.05.2001 DE 10123789**

(43) Veröffentlichungstag der Anmeldung:
**20.11.2002 Patentblatt 2002/47**

(73) Patentinhaber:
- **Philips Intellectual Property & Standards GmbH**
  **20099 Hamburg (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB**

(72) Erfinder:
- **Loef, Christoph,**
  **Philips Corp. Intell. Prop. GmbH**
  **52066, Aachen (DE)**
- **Hattrup,Christian,**
  **Philips Corp.Intell. Prop. GmbH**
  **52066, Aachen (DE)**
- **Scheel, Thomas,**
  **Philips Corp .Intell. Prop. GmbH**
  **52066, Aachen (DE)**

- **Märtens, Olaf,**
  **Philips Corp .Intell. Prop. GmbH**
  **52066, Aachen (DE)**
- **Ossmann, Martin,**
  **Philips Corp .Intell. Prop. GmbH**
  **52066, Aachen (DE)**

(74) Vertreter: **Maiwald Patentanwalts GmbH**
**Elisenhof**
**Elisenstraße 3**
**80335 München (DE)**

(56) Entgegenhaltungen:
EP-A- 0 902 528     EP-A- 1 030 435
EP-A- 1 081 839     US-A- 6 072 856

- **HATTRUP C ET AL: "FAST ESTIMATION OF UNKNOWN RESONANT FREQUENCIES BY MEANS OF THE VACON SHIP SET" EPE '97. 7TH. EUROPEAN CONFERENCE ON POWER ELECTRONICS AND APPLICATIONS. TRONDHEIM, SEPT. 8 - 10, 1997, EPE . EUROPEAN CONFERENCE ON POWER ELECTRONICS AND APPLICATIONS, BRUSSELS, EPE ASSOCIATION, B, Bd. VOL. 3 CONF. 7, 8. September 1997 (1997-09-08), Seiten 3353-3357, XP000768318 ISBN: 90-75815-02-6**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Stromversorgungssystem, ein Röntgengerät mit einem Stromversorgungssystem und ein Verfahren zur Bestimmung von Betriebsparametern eines Stromversorgungssystems.

Zur Strom- bzw. Spannungsversorgung von elektrischen Verbrauchern werden häufig Schaltnetzteile eingesetzt. Solche Schaltnetzteile setzen üblicherweise die Netzspannung in solche Spannungswerte um, die zum Betrieb der jeweiligen Verbraucher erforderlich sind. Bekannte Schaltnetzteile umfassen einen Wechselrichter bzw. Umrichter, der aus einer Gleichspannung eine geschaltete Wechselspannung erzeugt. Hierzu weist ein solcher Umrichter steuerbare Schalter auf. Diese geschaltete Wechselspannung (Umrichterausgangsspannung) wird von einem Transformator in eine Wechselspannung mit für den jeweiligen Verbraucher geeigneter Amplitude umgesetzt, also herauf- bzw. herunter transformiert. Falls der Verbraucher eine Gleichspannungsversorgung benötigt, wird die sekundärseitige Transformator-Wechselspannung gleichgerichtet und üblicherweise mit Hilfe eines Glättungskondensators stabilisiert.

Zur Optimierung des Betriebs werden Schaltnetzteile als Resonanzanordnungen betrieben. Hierbei bildet ein Resonanzkondensator zusammen mit der Streuinduktivität des Transformators (die durch eine diskrete Induktivität ergänzt werden kann) einen Serienresonanzkreis, der ggf. durch die sekundärseitige Wicklungskapazität des Transformators zu einem serien-parallel-resonanten Resonanzkreis erweitert wird. Im Betrieb wird die Arbeitsfrequenz des Umrichters so gewählt, dass diese nahe der Eigenresonanzfrequenz des Lastkreises liegt. Dadurch wird der Spannungsabfall an der Impedanz des Resonanzkreises minimal.

Ein Anwendungsbeispiel für ein Schaltnetzteil ist die Spannungsversorgung einer Röntgenröhre. Röntgenröhren werden mit Spannungen im Bereich von ca 40 kV bis 150 kV und Strömen bis 1,3 A gespeist. Die Röhrenspannung wird mit einem Regler auf den erforderlichen Sollwert ausgeregelt. Der Regler benutzt als Stellgröße die Ansteuerung des Umrichters, d.h. die Schaltfrequenz und ggf. das Tastverhältnis.

Die bei dieser Anwendung realisierten Resonanzkreise weisen in der Regel eine sehr hohe Güte auf. Dadurch ist das Übertragungsverhalten stark frequenzabhängig. Toleranzen der eingssetzten Komponenten, z. B. verschiedene Kapazitätswerte des Resonanzkondensators, oder verschiedene Werte für die Streuinduktivität des Transformators, auch durch Alterung, beeinflussen die Resonanzfrequenz.

Es ist daher für die Regelung von Interesse, dass für maßgebliche Größen der Regelstreckebeispielsweise die Kapazität des Resonanzkondensators und die Streuinduktivität des Transformators - von bekannten Werten ausgegangen werden kann. Dies kann durch den Einsatz hochgenauer Komponenten gewährleistet werden, was aber entsprechend teuer ist. Zusätzlich stellt sich das Problem der Abweichung von Komponentenwerten aufgrund von Alterung.

In dem Artikel "Fast estimation of unknown resonant frequencies by means of the VeCon chip set", EPE'97 Trondheim, 1997, Vol. 3, pp. 353-357 wurde bereits ein Stromversorgungssystem beschrieben, das aus einem Schaltnetzteil mit einer zusätzlichen Regelvorrichtung gebildet wird Die Regelvorrichtung weist einen Stromsensor zur Messung des Stroms auf der Primärseite des Übertragers und einen Steuerausgang zur Steuerung des Umrichters auf. Die Regelvorrichtung umfasst eine Messvorrichtung zur Bestimmung der Resonanzfrequenz des geregelten Resonanzkreises. Im Betrieb des Stromversorgungssystems, bei dem der Umrichter mit einer Schaltfrequenz f betrieben wird, wird der Verlauf des primärseitigen Stroms durch Abtastwerte beobachtet. Aus den Abtastwerten wird die Resonanzfrequenz geschätzt und der Umrichter nach erfolgter Schätzung so eingsstellt, dass das Stromversorgungssystem exakt mit der Resonanzfrequenz betrieben wird.

Mit dem angegebenen Regelungsverfahren ist der Betrieb bei plötzlich auftretenden Änderungen stabil möglich. Hierfür ist jedoch eine Beobachtung des primärseitigen Stroms im laufenden Betrieb erforderlich, was Schwierigkeiten bei der Messung verursacht. Außerdem ist das verwendete "on-line" -Verfahren aufwendig, so dass nur sehr einfache Anpassungen der Ansteuerung - hier die Anregungsfrequenz - möglich sind.

Es ist daher Aufgabe der Erfindung ein Stromversorgungssystem und ein Verfahren zur Bestimmung seiner Betriebsparameter sowie insbesondere ein Röntgengerät mit einem solchen Stromversorgungssystem vorzuschlagen, mit dem die notwendigen Betriebsparameter auf besonders einfache Weise bestimmt werden können.

Diese Aufgabe wird gelöst durch ein Stromversorgungssystem nach Anspruch 1, ein Röntgengerät nach Anspruch 10 und ein Verfahren nach Anspruch 11. Abhängige Ansprüche beziehen sich auf vorteilhafte Ausführungsformen der Erfindung

Das Stromversorgungssystem weist einen Umrichter und einen davon gespeisten Transformator auf. Der Umrichter verfügt seinerseits über eine Spannungsversorgung, üblicherweise eine Gleichspannungsversorgung (Zwischenkreisspannung), aus der er durch getaktetes Schalten eine Wechselspannung von durch die Ansteuerung vorgegebener Frequenz erzeugt. Ein Umrichter kann beispielsweise zwei solcher Schalter aufweisen, üblich sind auch Umrichtertopologien mit vier Leistungsschaltern. Eine weitere Variante einer Umrichtertopologie ist beispielsweise in der EP 884 830 angegeben. Auf die konkrete Gestaltung des Umrichters kommt es im Zusammenhang mit der Erfindung nicht an.

Die Umrichterausgangsspannung speist einen Transformator, der ebenfalls beliebig aufgebaut sein kann und - je nach Ausgestaltung des Systems - unterschiedliche Windungszahlen, Übersetzungsverhältnisse, Anzahl, Abgriffe etc. aufweisen kann. Der Transformator weist in der Regel eine gewisse Wicklungskapazität auf, die beim Verhalten der Regelstrecke eine Rolle spielen kann. Sekundärseitig wird die Ausgangsspannung des Transformators häufig gleichgerichtet und mit einem Glättungskondensator geglättet. Eine Resonanzkapazität, die üblicherweise primärseitig in Reihe geschaltet ist, bildet zusammen mit der Streuinduktivität des Übertragers eine Resonanzanordnung

Weiter gehört zum Stromversorgungssystem eine Messvorrichtung, die einen Stromsensor und Mittel zur Ansteuerung des Umrichters aufweist. Die Messvorrichtung steuert über die Ansteuerung des Umrichters den Messvorgang und nimmt dabei Strommessungen über den Stromsensor vor. In der Realisierung kann die Messvorrichtung verschiedene Formen annehmen, üblicherweise wird es sich um eine Schaltung mit einem Mikroprozessor oder Signalprozessor handeln, dem die Messwerte in digitaler Form zugeleitet werden. Die Messvorrichtung muss nicht notwendigerweise eine separate Schaltung sein; falls beispielsweise eine Mikroprozessor-Einheit zur Realisierung einer digitalen Regelung bereits vorhanden ist, kann die Messvorrichtung auch als zusätzliche Funktion dieser bestehenden Schaltung realisiert werden.

Die Messvorrichtung führt die Messung bei anfangs energielosen Komponenten des Stromversorgungssystems aus, d.h. wenn die Kapazitäten entladen sind und kein Strom durch die Induktivitäten fließt. Dies kann beispielsweise gewährleistet werden durch eine ausreichend lange Wartezeit seit dem letzten Einschalten des Stromversorgungssystems, wenn das Entladeverhalten der im System vorhandenen Energiespeicher (z.B. Kondensatoren) bekannt ist.

Die Messvorrichtung steuert zu Beginn des Messvorgangs den Umrichter so an, dass eine vorbestimmte Umrichterausgangsspannung erzeugt wird. Hierbei wird die Ansteuerung des Umrichters in einer Weise bevorzugt, bei der die Umrichterausgangsspannung eine Gleichspannung ist. In einer Weiterbildung der Erfindung wird die Umrichterausgangsspannung lediglich für ein kurzes Anregungsintervall eingeschaltet und danach die Schalter des Umrichters so angesteuert, dass danach keine weitere Spannung anliegt. Die Dauer des hierdurch definierten Anregungsintervalls sollte möglichst kurz sein, beispielsweise nicht mehr als zehn volle Schwingungsperioden betragen (die genaue Dauer einer Schwingungsperiode ist zwar unbekannt, der Größenordnung nach ist die Dauer aber durch die verwendeten Komponenten vorbestimmt). Bevorzugt werden eine geringere Anzahl von Perioden, möglichst weniger als vier, besonders bevorzugt sogar ein Anregungsintervall von weniger als einer Periodendauer, jedoch mindestens solange wie eine halbe Periodendauer. In einer möglichen Ausgestaltung wird eine Schätzung für die gesuchten Parameter bereits aus der ersten Schwingungsperiode gewonnen, und das Ergebnis dann anhand der weiteren Schwingungen verifiziert. Dies gilt jedoch nur solange, wie die Ausgangsspannung noch sehr klein bleibt, man also sekundärseitig in guter Näherung noch von einem Kurzschluss ausgehen kann.

Über den Stromsensor wird der sich einstellende Strom gemessen. Die Erfindung macht sich hierbei die Erkenntnis zunutze, dass aufgrund der (anfangs entladenen) sekundärseitigen Kapazitäten (Wicklungskapazität des Transformators und der Glättungskapazität) das Stromversorgungssystem im Einschaltzeitpunkt als sekundärseitig kurzgeschlossen angesehen werden kann. Hierbei ist das Anregungsintervall bevorzugt größer als das Beobachtungsintervall, so dass der Resonanzstrom ohne weitere Beeinflussung gemessen werden kann. Die Näherung weist für eine Messung im bevorzugten kurzen Beobachtungsintervall von wenigen Schwingungen nur einen geringen Fehler auf; wird sogar nur die erste Halbschwingung betrachtet, stellt sich mit hoher Genauigkeit ein sinusförmiger Verlauf des Stroms ein. Der Verlauf des Stroms wird durch den Stromsensor gemessen, wobei aus dem Verlauf die wichtigsten Parameter des Resonanzkreises, hier gebildet aus dem Resonanzkondensator und der Streuinduktivität des Transformators, angemessen werden. Dies sind die Resonanzfrequenz, die Impedanz und die Werte für die Resonanzkapazität und Resonanzinduktivität, wobei diese vier Werte voneinander abhängig sind, so dass jeweils nur zwei der Werte bestimmt werden müssen, wodurch dann auch die übrigen festliegen.

Für die Bestimmung der interessierenden Parameter des Stromversorgungssystems, nämlich der Resonanzfrequenz, der Impedanz und/oder der Werte für die Streuinduktivität und die Resonanzkapazität, werden in verschiedenen Weiterbildungen der Erfindung unterschiedliche Verfahren vorgeschlagen.

Auf einfache Weise kann die Resonanzfrequenz bestimmt werden, indem die Zeitdauer zwischen zwei Nulldurchgängen des sich bei der Anregung einstellenden sinusförmigen Resonanzstroms ermittelt wird. Erfolgt die Messung des Stroms nicht kontinuierlich, sondern nur in Abtastwerten, so können die Nulldurchgänge durch Interpolation bzw. Extrapolation von Abtastwerten bestimmt werden. Der hierbei entstehende Fehler ist wegen der relativ konstanten Steigung einer Sinusfunktion im Bereich des Nulldurchgangs sehr gering.

Alternativ kann die Messvorrichtung die Resonanzfrequenz bestimmen, indem sie an die Abtastwerte des Stroms eine Sinusfunktion anpasst. Unter "Anpassung" wird das Aufsuchen einer geeigneten Sinusfunktion verstanden, die sich hinsichtlich eines Fehlermaßes den Abtastpunkten bestmöglich annähert. Bevorzugt wird eine Anpassung, bei der als Fehlermaß die Summe der Fehlerquadrate (mean squared error) minimiert wird.

Auch für die Bestimmung der Impedanz bzw. der Werte für die Resonanzkapazität und - induktivität werden verschiedene Messverfahren vorgeschlagen. Auf besonders einfache Weise kann die Impedanz bestimmt werden, wenn die Werte für den primärseitigen Strom und die primärseitige Spannung bekannt sind. Die primärseitige Spannung wird durch die Anregung, d.h. durch die Umrichterausgangsspannung vorgegeben. Diese ist bevorzugt konstant auf einem bekannten Wert, alternativ kann sie auch ständig gemessen werden. Der Stromverlauf ist, wie oben ausgeführt, zumindest für die ersten Schwingungsperioden in guter Näherung als sinusförmig anzusehen. Damit kann die Impedanz bei bekannter Anregungsspannung sehr einfach bestimmt werden, wenn der Maximalwert (Amplitude) des Stroms bekannt ist.

Bei ausreichend vielen Abtastwerten innerhalb einer Schwingungsperiode kann das Strommaximum ermittelt werden, indem das Maximum der Abtastwerte verwendet wird. Wegen des flachen Verlaufs einer Sinuskurve im Bereich ihres Maximums wird hierdurch nur ein sehr geringer Fehler erzeugt. Gemäß einem alternativen Verfahren wird die Amplitude des Stroms aus Abtastwerten ermittelt, indem eine Sinusfunktion an die Abtastwerte angepasst wird .Dies ist besonders einfach, wenn mit einem der vorgenannten Verfahren die Resonanzfrequenz bereits bestimmt worden ist.

Als Weiterbildung der Erfindung weist das Stromversorgungssystem eine Regelvorrichtung auf, mit der ausgangsseitige Größen, beispielsweise die Ausgangsspannung, geregelt werden können. Die Regelvorrichtung verwendet als Stellgröße die Ansteuerung des Umrichters (z.B. die Schaltfrequenz und/oder das Tastverhältnis). Besonders wichtig für die Auslegung des Reglers sind hierbei die vorab bestimmten Parameter der Regelstrecke, nämlich die Resonanzfrequenz, Impedanz und/oder Werte für Resonanzkapazität bzw. -induktivität. Die Regelvorrichtung verwendet daher bevorzugt diese vorab bestimmten Parameter, so dass eine sehr genaue Regelung möglich ist.

Besonders relevant ist dies beispielsweise bei Röntgengeräten, bei denen eine hochgenaue Regelung notwendig ist. Für den Betrieb einer Röntgenröhre, d.h. Einschalten und Hochfahren der Spannung bis zum gewünschten Wert, gelten harte Spezifikationen bezüglich Überschwingen, Ausregelzeit und Form des Spannungshochlaufes. Eine Regleradaption ermöglicht, diese Spezifikationen auch dann einzuhalten, wenn die verwendeten Bauteile größere Toleranzen oder ein Alterungsverhalten aufweisen. Hierzu kann beispielsweise nach jedem Serviceintervall eines Röntgengeräts das vorgeschriebene Messverfahren ausgeführt werden, um die benötigten Parameter der Regelstrecke zu ermitteln. Diese werden dann an die Regelvorrichtung übermittelt und dort abgespeichert, so dass im weiteren Betrieb die Regelvorrichtung mit sehr genauen Informationen über das Verhalten der Regelstrecke arbeiten kann.

Nachfolgend wird eine Ausführungsform der Erfindung anhand von Zeichnungen näher beschrieben. In den Zeichnungen zeigen:

Fig. 1:      Ein Schaltbild eines Stromversorgungssystems;

Fig. 2:      eine Darstellung des zeitlichen Verlaufs von Strömen und Spannungen aus Figur 1;

Fig. 3:      eine schematische Darstellung des Verlaufs des Stroms;

Fig. 4:      ein Diagramm, das die Abhängigkeit der geschätzten Resonanzfrequenz $\hat{f}_R$ vom Schätzparameter $\hat{\rho}$ darstellt;

Fig. 5:      eine schematische Darstellung des Verlaufs des Stroms mit Abtastpunkten;

Fig.6:      eine Darstellung des Zeitverlaufs der Ausgangsspannung.

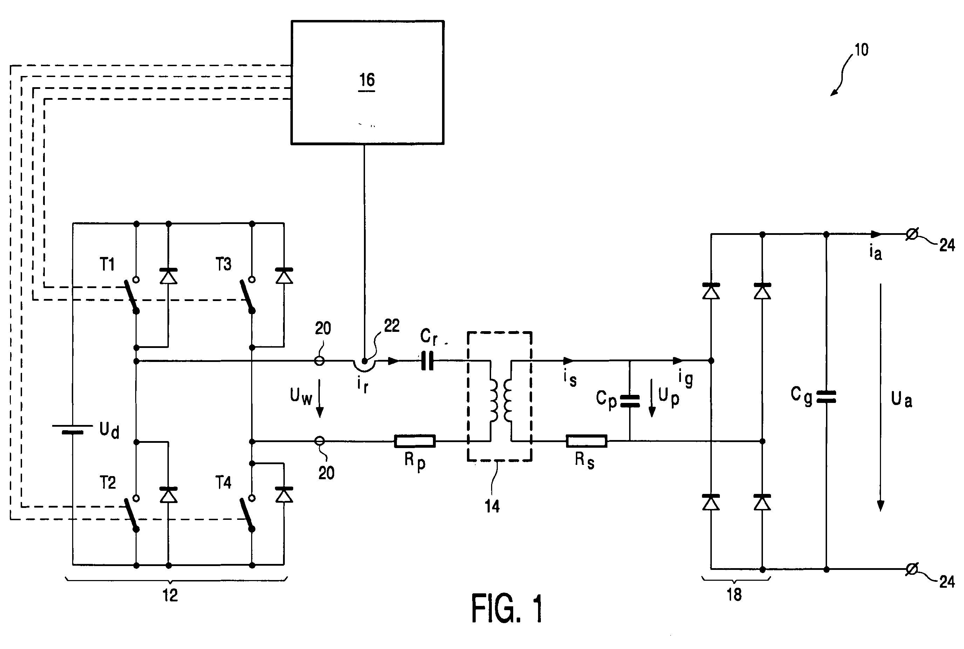

In Figur 1 ist das Schaltbild eines Stromversorgungssystems 10 dargestellt, das einen Umrichter 12, einen Transformator 14, eine Messvorrichtung 16 und einen Gleichrichter 18 aufweist.

Der Umrichter 12 weist vier hier lediglich symbolisch dargestellte gesteuerte Leistungsschalter $T_1$, $T_2$, $T_3$, $T_4$ auf. Eine Gleichspannungsquelle $U_d$ versorgt den Umrichter 12 mit Spannung. Je nach Stellung der Schalter $T_1$ bis $T_4$ kann so an den Ausgangsanschlüssen 20 eine Umrichterausgangsspannung $u_W$ erzeugt werden, die entweder $U_d$, 0 oder $-U_d$ beträgt.

Werden beispielsweise die Schalter $T_1$ und $T_4$ geschlossen, während $T_2$ und $T_3$ offen bleiben, entspricht die Umrichterausgangsspannung $u_w$ der Versorgungsspannung $U_d$ des Umrichters. Die Versorgungsspannung $U_d$, die hier als Spannungsquelle eingezeichnet ist, ist in der Praxis üblicherweise eine gleichgerichtete Netzspannung (Zwischenkreisspannung).

An den Umrichterausgängen 20 ist die Primärseite des Transformators 14 angeschlossen. In Reihe hiermit ist ein Resonanzkondensator $C_r$ geschaltet. Der eingezeichnete Widerstand $R_p$ repräsentiert den Wicklungswiderstand der Primärseite des Transformators.

Primärseitig fließt der Strom $i_r$. Zur Messung dieses Stroms ist ein Stromsensor 22 vorgesehen. Der erfasste Messwert wird von der Messvorrichtung 16 ausgewertet.

Der Transformator 14 wird für die jeweilige Anwendung des Stromversorgungssystems 10 geeignet ausgewählt. Beispielsweise wird für die Hochspannungsversorgung einer Röntgenröhre die Spannung durch einen Hochspannungstransformator hochtransformiert.

Sekundärseitig ist an den Transformator 14 der Gleichrichter 18, hier ein herkömmlicher Brückengleichrichter, angeschlossen. Die in Figur 1 dargestellte Kapazität $C_p$ und der Widerstand $R_s$ repräsentieren die Wicklungskapazität

und den Wicklungswiderstand der Sekundärseite des Transformators 14. Der Brückengleichrichter 18 weist Ausgangsanschlüsse 24 auf, zwischen denen die Glättungskapazität $C_g$ zur Glättung der Ausgangsspannung $U_a$ parallel geschaltet ist.

Das Stromversorgungssystem 10 weist einen Regler (nicht dargestellt) auf, der zur Erzielung einer vorgege-benen Ausgangsspannung $U_a$ den Umrichter 12 entsprechend ansteuert. Bei dieser Regelung ist zu berücksichtigen, dass es sich um eine Resonanzanordnung handelt. Der Transformator 14 weist eine Streuinduktivität $L_r$ auf, die zusam-men mit dem Resonanzkondensator $C_r$ einen Serienresonanzkreis bildet. Die sekundärseitige Wicklungskapazität des Transformators 14 erweitert das System zu einem Serien-Parallel-Resonanzkreis.

Im Betrieb wird die Arbeitsfrequenz des Umrichters 12 so gewählt, dass sie nahe der Eigenresonanz des Lastkreises liegt. Die Eigenresonanzfrequenz hängt hierbei maßgeblich vom Kapazitätswert des Resonanzkondensators $C_r$ und vom Wert der Streuinduktivität $L_r$ des Transformators 14 ab. Werden hier Bauteile mit erheblichen Toleranzen eingesetzt, müssen die Bauteilwerte erst bestimmt werden, um die für den Entwurf des Reglers notwendigen Informationen über die Regelstrecke zu haben. Derartig genaue Kenntnisse sind insbesondere bei Spannungsversorgungen für Röntgenröhren notwendig .Hier gibt es sehr enge Vorschriften bezüglich eines schnellen Hochfahren der Spannung ohne Überschwingen.

Die notwendigen Informationen über die Regelstrecke, d.h. die Resonanzfrequenz, die Impedanz des Resonanzkreises und die Werte für die Kapazität des Resonanzkondensators $C_r$ und die Streuinduktivität $L_r$ werden durch die Messvorrichtung 16 bestimmt. Hierbei sind diese Werte selbstverständlich voneinander abhängig, d.h. aus jeweils Zweien dieser Werte können die beiden übrigen bestimmt werden. Die Messvorrichtung 16, die im Detail nicht näher dargestellt ist, enthält einen Mikroprozessor mit einer geeigneten Ansteuerelektronik für die Schalter $T_1$ bis $T_4$ des Umrichters 12 und einem A/D-Wandler zur Auswertung der Messwerte des Stromsensors 22 in digitaler Form. Der Messvorrichtung 16 ist außerdem der Wert der Spannung $U_d$, d.h. der Versorgungsspannung des Umrichters 12 bekannt. Die Messvorrichtung ist in der Lage die benötigten Messwerte zu bekannten, bevorzugt äquidistanten Abtastzeitpunkten zu erfassen und zu verarbeiten.

Die Messvorrichtung 16 führt selbsttätig und automatisch das nachfolgend beschriebene Messverfahren zur Bestimmung der Parameter durch and wectet die dabei durchgeführten Messungen aus.

Zu Beginn der Messung wird davon ausgegangen, dass der Resonanzkreis energiefrei ist, d.h. alle Kondensatoren sind spannungsfrei und die Ausgangsspannung $U_a$ hat den Wert Null. Dieser Zustand kann durch ein gezieltes Entladen der in der Schaltung vorhandenen Energiespeicher hergestellt werden, üblicherweise reicht aber ein ausreichend langes Abwarten nach dem Ausschalten der Schaltung aus .Hierbei ist die Entladezeit für die Kondensatoren bekannt, so dass für eine konkrete Schaltung leicht bestimmt werden kann, wann mit für die Messung ausreichender Genauigkeit davon ausgegangen werden kann, dass die Energiespeicher entladen sind. Alternativ ist es auch möglich, das Messverfahren bei (zumindest teilweise) aufgeladenen Energiespeichern durchzuführen.

Dies macht die Messung aber deutlich schwieriger, da der jeweilige Ladezustand der Kondensatoren bekannt sein muss und herausgerechnet wird.

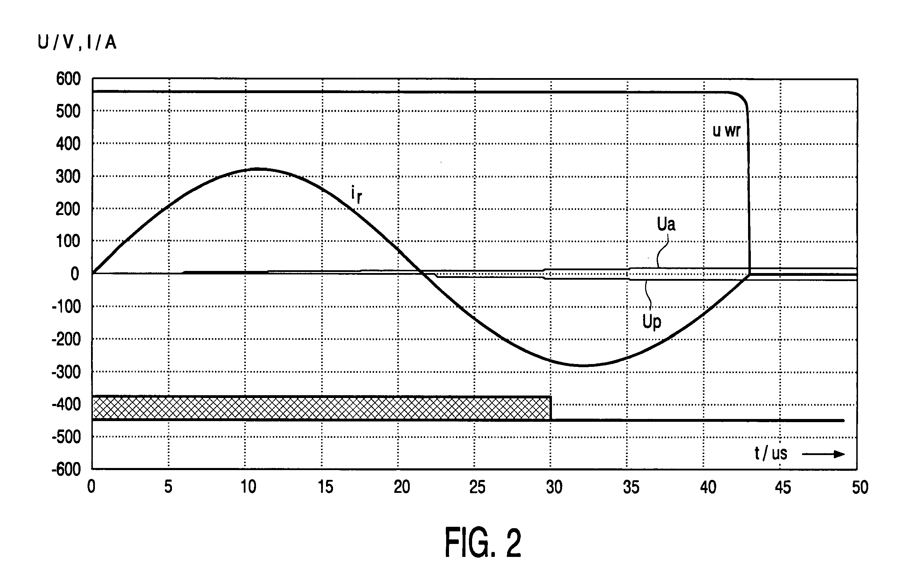

Wird nun zu einem Zeitpunkt t = 0 bei energiefreiem Stromversorgungssystem 10 eine Diagonale des Wech-selrichters eingeschaltet (z.B. $T_1$ und $T_4$) so liegt am Eingang 20 des Resonanzkreises eine Spannung $u_w$ an, die der Größe der Zwischenkreisspannung $U_d$ entspricht. In Figur 2 sind die entsprechenden Systemgrößen dargestellt. Im Serienresonanzkreis bildet sich eine Resonanzschwingung mit einem sinusförmigen Stromverlauf $i_r$ aus. Die sich an der Glättungskapazität $C_g$ abbildende Spannung $U_a$ ist das Integral des Betrags des sekundärseitigen Stroms $i_g$.

Da zu Beginn der ersten Resonanzhalbschwingung die Kapazitäten $C_p$ und $C_g$ spannungslos sind, können beide Kondensatoren zu einem Ersatzkondensator $C_{pg} = C_p + C_g$ zusammengefasst werden. Die nun wirksame Glättungskapazität ist wesentlich größer als die Serienresonanzkapazität $C_r$, daher fällt die sich an $C_{pg}$ abbildende Spannung wesentlich kleiner als die Zwischenkreisspannung $U_d$ aus. Insofern kann das System in erster Näherung als sekundärseitig kurzgeschlossen angesehen werden. Daher ist eine Beeinflussung der sinusförmigen Resonanzschwingung des Stroms $i_r$ zu vernachlässigen.

Die in Figur 2 dargestellten Systemgrößen zeigen primärseitig bezogene Größen eines Stromversorgungssystems für eine Röntgenröhre. Die sekundärseitigen Größen für $U_p$ und $U_a$ ergeben sich durch die Multiplikation mit dem Übersetzungsfaktor. Es ergeben sich hierbei typische Größen von 5,5 kV für $U_a$ nach einer Halbperiode.

Die primärseitig bezogene Ausgangsspannung beträgt ca. 10 V; das entspricht 1,8 % der nominalen Zwischenkreisspannung $U_d$ von 550 V. Durch den geringen Anstieg der Ausgangsspannung ist sichergestellt, dass die ausgangssei-tigen Kondensatoren $C_p$ und $C_g$ keinen essentiellen Einfluss auf den Verlauf der Resonanzschwingung im Lastkreis haben. Für die folgende Betrachtung wird ihr Einfluss daher vernachlässigt.

Die Zeitdauer einer Stromhalbschwingung ist von den Größen der Komponente $L_r$ (Streuinduktivität des Trans-formators 14) und $C_r$ (Resonanzkapazität) abhängig .Wie in Figur 2 dargestellt steuert die Messvorrichtung 16 daher den Umrichter 12 so an, dass Schalter $T_1$ und $T_4$ für ein kurzes Anregungsintervall (in diesem Beispiel 30 µs) geschlossen sind. Danach werden die Schalter wieder geöffnet. Die Einschaltdauer der Schalter $T_1$ und $T_4$, d.h. die Dauer des Anregungsintervalls sollte dabei mindestens der maximal zu erwartenden halben Periodendauer der Serienresonanzkreiselemente entsprechen, damit eine Halbschwingung erzeugt wird und ohne Störung beobachtet werden kann. Dies kann gewährleistet werden, indem die Abschaltung der Schalter $T_1$ und $T_4$ während oder mit vorbestimmter kurzer Wartezeit nach dem Polaritätswechsel des Resonanzstroms $i_r$ erfolgt. Da bei einem konkreten Stromversorgungssystem 10 die Bauteilwerte für $C_r$ und $L_r$ aber zumindest näherungsweise bekannt sind, kann auch eine feste Länge des Anregungsintervalls vorgegeben werden, die mit ausreichendem Abstand sicherstellt, dass die Anregung mindestens einer halben Periodendauer entspricht.

Die Anregungsspannung (hier: $U_d$) sollte während des Anregungsintervalls konstant sein. Alternativ, falls dies beispielsweise nicht gewährleistet werden kann, kann der Wert der Umrichterausgangsspannung $U_w$ auch gemessen werden. Die Messwerte werden der Messvorrichtung 16 zugeführt, die die Einflüsse eventueller Schwankungen herausrechnet.

Mit $U_{wr}$ ist in Fig 2 die Umrichterausgangsspannung bezeichnet. Wie dargestellt bleibt diese aufgrund des fließenden Resonanzstroms auch nach dem Öffnen aller Schalter $T_1$, $T_2$, $T_3$, $T_4$ zunächst auf $+U_d$, der Strom fließt dann über die zu den Schaltern anti-parallel geschalteten Dioden.

Der in Figur 2 dargestellte sich einstellende Verlauf für den Strom $i_r$ wird von der Messvorrichtung 16 über den Stromsensor 20 gemessen. Bei vorher energiefreiem Stromversorgungssystem 10 ergibt sich in sehr guter Näherung eine reine Sinusschwingung (dies gilt insbesondere für die ersten Perioden, ganz besonders für die erste Halbschwingung). Durch die Beobachtung der sich einstellenden Schwingung können die gesuchten Informationen über die Resonanzelemente $C_r$ und $L_r$ bzw. die Resonanzimpedanz und Resonanzfrequenz bestimmt werden. Hierzu gibt es mehrere Möglichkeiten, die im folgenden erläutert werden. In einer konkreten Realisierung wird man die für die jeweils zur Verfügung stehenden Bauelemente, insbesondere je nach in der Messvorrichtung 16 zur Verfügung stehender Verarbeitungsgeschwindigkeit, eine geeignete Kombination der nachfolgend vorgestellten Messverfahren auswählen.

**Beschreibung des ersten Verfahrens zur Ermittlung der Eigenresonanzfrequenz**

Nach dem Einschalten der Transistoren $T_1$ und $T_4$ bildet sich im Resonanzkreis ein sinusförmiger Resonanzstrom aus. Der sinusförmige Strom $i_r$ mit der Amplitude $I_P$ und der Frequenz $f_R$ kann vereinfachend beschrieben werden durch:

$$I(t) = I_P * \sin(2 \cdot \pi \cdot f_R \cdot t + \Phi) \tag{1}$$

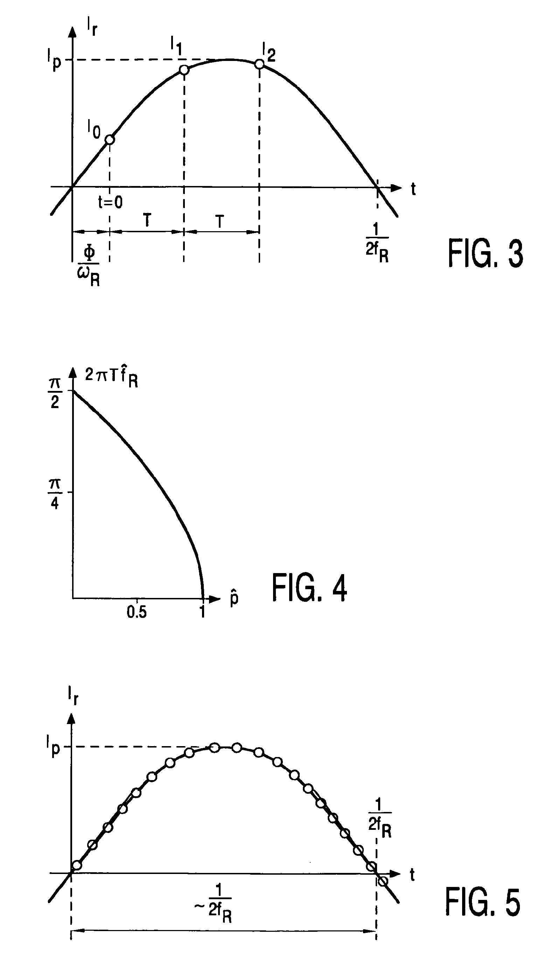

Wie in Figur 3 gezeigt wird der Strom in äquidistanten Zeitabständen T gemessen.

Die Abtastwerte des Stromes

$$I_k = I(k \cdot T)$$

lassen sich durch eine Funktion mit linearen Koeffizienten darstellen

$$I_{k+1} = 2 \cdot \rho \cdot I_k - I_{k-1} \tag{2}$$

mit

$$\rho = \cos(2 \cdot \pi \cdot f_R \cdot T)$$

wobei das Abtastintervall durch T gegeben ist.

Dieser Zusammenhang kann genutzt werden, um die Frequenz $f_R$ aus den gemessenen Stromwerten $I_k$ zu bestimmen .Gleichung (2) kann als Schätzer für $I_{k+1}$ gesehen werden, basierend auf $I_k$ und $I_{k-1}$. Der lokale Fehler des Schätzers ergibt sich zu

$$e_k = I_{k+1} - 2 \cdot \rho \cdot I_k + I_{k-1}$$

Für ein sinusföxmiges Signal wird dieser Fehler zu Null. Er ist klein für Strommesswerte, die aufgrund von Messfehlern und Jitter verrauscht sind Der Wert $\rho$ kann nun ermittelt werden, indem man den globalen Schätzfehler E berechnet:

$$E = \sum_{k=1}^{N-2} e_k^2 \qquad . \tag{3}$$

Der globale Schätzfehler E wird minimal durch Lösung der Gleichung

$$\frac{d\mathrm{E}}{d\rho} = 0 \,.$$

Dies führt zu

$$\hat{\rho} = \frac{\sum_{k=1}^{N-2}[I_k \cdot (I_{k-1} + I_{k+1})]}{2 \cdot \sum_{k=1}^{N-2}[I_k]^2} \tag{4}$$

als optimalen Wert.

Um $\hat{\rho}$ zu berechnen wind also eine Minimierung der Fehlerquadrate durchgeführt, wobei N Messwerte $I_k$ verwendet werden. Für N=4 ergibt sich beispielsweise

$$\hat{\rho} = \frac{I_1 \cdot (I_0 + I_2) + I_2 \cdot (I_1 + I_3)}{2 \cdot (I_1^2 + I_2^2)} \tag{5}$$

Im nächsten Schritt wind die Resonanzfrequenz bestimmt:

$$\hat{f}_R = \frac{1}{2 \cdot \pi \cdot T} \cdot \arccos(\hat{\rho}) \tag{6}$$

Dies wird in Figur 4 veranschaulicht, in einem digitalen Prozessorsystem wird die Kurve in einer Tabelle abgespeichert. Dabei wird die Auflösung von $2 \cdot \pi \cdot \hat{f}_R \cdot T$ ziemlich schlecht, wenn die Werte von $\hat{\rho}$ nahe bei eins liegen.

Wenn man die Anzahl N der Abtastpunkte erhöht, kann normalerweise eine höhere Genauigkeit erreicht werden. Allerdings wird auch der Zeitabstand T zwischen den einzelnen Abtastpunkten kleiner, was zu einem größeren Wert für $\hat{\rho}$ führt. Das wiederum vermindert die Stabilität von Gleichung (6), wie man in Figur 4 sieht. Es bietet sich also ein N von vier oder fünf an, wenn man Messfehler und Jitter berücksichtigt. Außerdem ist der Rechenaufwand mit weniger Messpunkten geringer.

**Beschreibung des zweiten Verfahrens zur Ermittlung der Eigenresonanzfrequenz**

Alternativ kann die Resonanzfrequenz auch auf eine zweite Art ermittelt werden. Ziel dieses zweiten Verfahrens ist es, die Resonanzfrequenz aus dem Abstand der Strom-Nulldurchgänge zu ermitteln. Da es kaum möglich ist, den Strom-Nulldurchgang direkt zu messen, wird der Strom äquidistant abgstastet und jeweils zwei Messpunkte, die dem Strom-Nulldurchgang am nächsten liegen, zur linearen Extra- bzw. Interpolation verwendet. Um den Zeitpunkt des Nulldurchgangs möglichst genau erfassen zu können, müssen nun die Messungen so schnell wie möglich nacheinander durchgeführt werden, so dass eine genügend große Anzahl von Messpunkten für die betrachtete erste Halbperiode der Schwingung zur Verfügung steht.

Dieses Verfahren führt nur einen geringen Fehler ein, da sich die Steigung einer Sinusfunktion im Bereich des Nulldurchgangs nur wenig ändert.

Figur 5 zeigt, dass der erste Nulldurchgang durch lineare Extrapolation der ersten beiden Messpunkte nach dem Nulldurchgangs erfolgt. Eine Interpolation ist nicht möglich, da die Sinusschwingung erst in diesem Moment angestoßen wird .Der zweite Nulldurchgang wird dann aber durch Interpolation des letzten positiven Wertes und des ersten negativen Wertes ermittelt.

**Beschreibung des ersten Verfahrens zur Impedanzbestimmung**

Wird ein Serienresonanzkreis durch Aufschalten einer konstanten Spannung angeregt, so stellt sich ein gedämpfter sinusförmiger Stromverlauf ein (vgl. Figur 2):

$$i(t) = I_P \cdot e^{-d\omega_0 t} \cdot \sin(\sqrt{1-d^2} \cdot \omega_0 t)$$

d.h. es liegt eine gedämpfte Schwingung $\left(d = \dfrac{R}{2\omega_0 L}\right)$ mit einer leicht erniedrigten Resonanzfrequenz

$(\omega_1 = \omega_0 \sqrt{1+d^2})$ vor. Bei hoher Güte des Resonanzkreises ist jedoch der ohm'sche Anteil sehr klein und beide Effekte können vernachlässigt werden. Es ergibt sich die Gleichung für eine ungsdämpfte Schwingung :

$$i(t) = I_P \cdot \sin(\omega_0 t) \, , \, \text{mit } I_P = \frac{U_d}{\sqrt{\dfrac{L}{C}}} = \frac{U_d}{Z_0} \, .$$

Die gesuchte Impedanz ergibt sich dann zu $Z_0 = \dfrac{U_d}{I_P} \cdot$ .

Mit einem der oben beschriebenen Verfahren kann die Resonanzfrequenz bestimmt werden. Nun wird aus den K gemessenen Stromwerten noch die Amplitude $I_p$ des Resonanzstroms, die für die Berechnung der Impedanz benötigt wird, ermittelt. Für die gemessenen Ströme gilt

$$I_k = I_P \cdot \sin(\omega_0 \cdot k \cdot T + \Phi) \, ,$$

wobei T das Abtastintervall und $\Phi$ die Phasenverschiebung darstellt.

Wählt man den Einschaltzeitpunkt als t=0 so ist die Phasenverschiebung gleich Null. Aufgelöst nach $I_P$ ergibt sich für jeden Messwert der Zusammenhang

$$I_P = \frac{I_k}{\sin(\omega_0 kt)} = \frac{I_k}{\sin(2\pi f_0 kT)} \, .$$

Eine Mittelung über sich aus allen ausgewerteten Messpunkten ergebenden Impedanzen kann das Ergebnis noch verbessern .Liegt somit ein ermittelter Wert für die Amplitude $I_P$ des Stroms vor, kann daraus bei bekannten $U_d$ die Impedanz $Z_0$ berechnet werden. Wie bereits erwähnt wird bevorzugt mit einem bekannten, konstanten $U_d$ gearbeitet. Alternativ kann $U_d$ auch gemessen werden

$$Z_0 = \frac{U_d}{I_P} \cdot$$

Bei bekannten $f_0$ und $Z_0$ können die Werte für $C_r$ und $L_r$ berechnet werden. Aus $f_n$ und $Z_0$ lassen sich folgendermaßen die Resonanzinduktivität $L_r$ und die Resonanzkapazität $C_r$ berechnen:

Aus den bekannten Gleichungen $f_0 = \dfrac{1}{2\pi \sqrt{L_r C_r}}$ und $Z_0 = \sqrt{\dfrac{L_r}{C_r}}$ ergabt sich durch Umstellen und gegenseitiges Einsetzen $C_r = \dfrac{1}{2\pi \cdot f_0 \cdot Z_0}$ und $L_r = \dfrac{Z_0}{2\pi \cdot f_0} \cdot$

**Zweites Verfahren zur Bestimmung der Impedanz**

Alternativ kann der Maximalwert des Stroms auch durch häufigere Abtastung direkt gemessen werden. Eine Bestimmung des Strom-Maximums ist bei ausreichend vielen Messwerten mit zufriedenstellender Genauigkeit möglich, da aufgrund der vielen Messpunkte und des flachen Verlaufs der Sinusrunktion im Maximum einfach der größte Messwert als Maximum angenommen werden kann. Das Strom-Maximum wird dann wie oben angegeben zur Ermittlung der Eigenimpedanz $Z_0$ des Kreises verwendet.

Die so ermittelten Parameter der Regelstrecke fließen in den Entwurf des Reglers für das Stromversorgungssystem 10 ein. Für den Entwurf eines entsprechenden Reglers kommen sämtliche herkömmlichen Entwurfstechniken, die dem Fachmann bekannt sind, in Frage. Ein Entwurfsverfahren ist in der DE 199 40 137 beschrieben, bei dem die Parameter $C_r$ und $L_r$ in den Reglerentwurf einfließen.

Wenn das für die jeweilige Anwendung ausgewählte Entwurfsverfahren wie das in der DE 199 40 137 beschriebene Verfahren rechnerisch relativ aufffendig ist, empfiehlt es sich die entsprechenden Berechnung für mögliche Werte von $L_r$ und $C_r$ bereits im Vorfeld durchzuführen und die sich daraus ergebenden Reglerparameter in einer Tabelle abzuspeichern. Nach Messung der Parameter mit einem der vorstehend beschriebenen Verfahren werden dann in dieser Tabelle die den gemessenen Werten entsprechende Reglerparameter aufgesucht und in den Regler geladen. Dies ist vor allem dann vorteilhaft möglich, wenn die Werte für $L_r$ und $C_r$ zwar näherungsweise bekannt sind, jedoch sich gewisse Schwankungen ergeben können. Dann kann eine entsprechende Tabelle mit ausreichend geringer Schrittweite für $L_r$ und $C_r$ erstellt und berechnet werden, so dass nach Messung der Parameter der Regler entsprechend genau eingestellt werden kann.

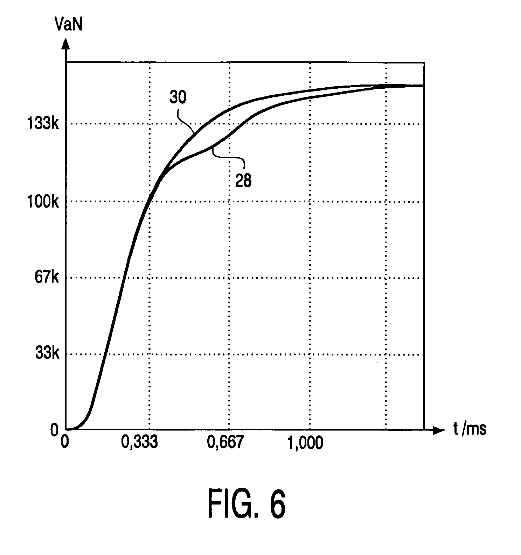

Figur 6 zeigt ein "Hochfahren" der Ausgangsspannung $U_a$ einer Stromversorgung 10 für eine Röntgenröhre, gesteuert durch den bereits erwähnten Regler aus der DE 199 40 137. Hierbei zeigt die Kurve 28 den Zeitverlauf der Ausgangsspannung $U_a$ für den Fall, dass sich in einem Bauteil, hier $C_r$, eine Abweichung von dem bei der Auslegung des Reglers angenommenen Kapazitätswert zeigt. Zum Vergleich zeigt die Kurve 30 den Zeitverlauf nach Messung der Werte für $C_r$ und $L_r$ und Adaption der Reglerparameter des Spannungsreglers.

Die Erfindung lässt sich dahingehend zusammenfassen, dass, um die notwendigen Betriebsparameter eines Stromversorgungssystems mit einem Umrichter zur Speisung einer Resonanzanordnung mit einem Transformator zu bestimmen, ein System mit einer Messvorrichtung vorgeschlagen wird, die den Umrichter so ansteuert, dass bei anfangs energielosen Komponenten des Stromversorgungssystems eine vorbestimmte Ausgangsspannung erzeugt wird, wobei aus der Messung des sich einstellenden Resonanzstroms auf der Primärseite des Transformators ein oder mehrere die Resonanzanordnung charakterisierende Parameter ermittelt werden. Hierbei wird nach einem bevorzugt kurzen Anregungsintervall aufgrund des Stromverlaufs die Resonanzfrequenz, die Impedanz der Resonanzanordnung der, Kapazitätswert der Resonanzkapazität und die Streuinduktivität bestimmt.

**Patentansprüche**

1. Stromversorgungssystem (10)

   - mit einem Umrichter (12) zur Erzeugung einer geschalteten Umrichterausgangsspannung ($U_w$),

- mit einem Transformator (14), der primärseitig vom Umrichter (12) gespeist wird und mit dessen Sekundärseite ein Lastausgang (24) verbunden ist,
- mit mindestens einer Resonanzkapazität ($C_r$), die mit einer Streuinduktivität ($L_r$) des Transformators (14) und/oder einer externen Induktivität eine Resonanzanordnung bildet,
- und einer Messvorrichtung (16) zur Ermittlung von Betriebsparametern des Stromversorgungssystems (10),
- wobei die Messvorrichtung (16) einen Stromsensor (22) zur Messung des Stroms ($i_r$) auf der Primärseite des Transformators (14)
- und Mittel zum Steuern des Umrichters (12) aufweist,

**dadurch gekennzeichnet, dass**

- die Messvorrichtung (16) so ausgebildet ist, dass sie den Umrichter (12) so ansteuert, dass
- bei anfangs energielosen Komponenten des Stromversorgungssystems (10) eine vorbestimmte Umrichterausgangsspannung ($U_w$) erzeugt wird,
- wobei aus der Messung des Stroms ($i_r$) auf der Primärseite des Transformators (14) ein oder mehrere die Resonanzanordnung charakterisierende Parameter ($f_0$, $Z_0$, $C_r$, $L_r$) ermittelt werden.

2. Stromversorgungssystem nach Anspruch 1, bei dem die Messvorrichtung (16) so ausgebildet ist, dass die Umnchterausgangsspannung ($U_w$) nach einem kurzen Anregungsintervall ausgeschaltet wird.

3. Stromversorgungssystem nach Anspruch 1 oder 2, bei dem die Messvorrichtung so ausgebildet ist, dass sie die Resonanzfrequenz ($f_0$) bestimmt, indem ausgehend von Abtastwerten des Stroms ($i_r$) mindestens eine Zeitdauer zwischen zwei Nulldurchgängen des Stroms ($i_r$) ermittelt wird

4. Stromversorgungssystem nach Anspruch 1 oder 2, bei dem die Messvorrichtung so ausgebildet ist, dass sie die Resonanzfrequenz ($f_0$) bestimmt, indem ausgehend von Abtastwerten des Stroms ($i_r$) eine Sinusfunktion angepasst wird, wobei ein Fehlermaß minimiert wird.

5. Stromversorgungssystem nach einem der vorangehenden Ansprüche, bei dem die Messvorrichtung 16 so ausgebildet ist, dass sie die Amplitude (Ip) des Stroms ($i_r$) ermittelt.

6. Stromversorgungssystem nach Anspruch 5, bei dem die Messvorrichtung so ausgebildet ist, dass sie die Amplitude ($I_P$) des Stroms ($i_r$) ermittelt, indem von Abtastwerten des Stroms($i_r$) ein Maximum oder Minimum bestimmt wird.

7. Stromversorgungssystem nach Anspruch 5, bei dem

- die Messvorrichtung (16) so ausgebildet ist, dass sie die Amplitude (Ip) des Stroms ($i_r$) ermittelt, indem an Abtastwerte des Stroms ($i_r$) eine Sinusfunktion angepasst wird.

8. Stromversorgungssystem nach einem der vorangehenden Ansprüche, bei dem

- als weitere Komponenten sekundärseitig ein Gleichrichter und/oder mindestens eine Glättungskapazität vorgesehen sind

9. Stromversorgungssystem nach einem der vorangehenden Ansprüche, bei dem

- eine Regelvorrichtung zur Regelung der Ausgangsspannung ($U_a$) vorgesehen ist,
- wobei die Regelung die ermittelten die Resonanzanordnung charakterisierenden Parameter ($f_0$, $Z_0$, $C_r$, $L_r$) verwendet.

10. Röntgengerät mit einem Stromversorgungssystem nach einem der vorangehenden Ansprüche.

11. Verfahren zur Bestimmung von Betriebsparametern eines Stromversorgungssystems (10),

- wobei das Stromversorgungssystem (10) einen Umrichter (12) zur Erzeugung einer Umrichterausgangsspannung ($U_w$), einen davon gespeisten Transformator (14), dessen Streuinduktivität ($L_r$) und/oder eine externe Induktivität mit einer Resonanzkapazität ($C_r$) eine Resonanzanordnung bildet und einen Lastausgang (24) aufweist, der mit der Sekundärseite des Transformators (14) verbunden ist,

**gekennzeichnet durch** die folgenden Schritte

- zunächst wird sichergestellt, dass die Komponenten des Stromversorgungssystems (10) energielos sind,
- dann wird der Umrichter (12) so angesteuert, dass mindestens für ein kurzes Anregungsintervall eine vorbestimmte Umrichterausgangsspannung ($U_W$) erzeugt wird,
- wobei mindestens während des Anregungsintervalls der sich einstellende Strom ($i_r$) auf der Primärseite des Transformators (14) gemessen wird

und aus der Messung des Stroms ($i_r$) eine oder mehrere der die Resonanzanordnung charakterisierenden Parameter ermittelt werden.

**Claims**

1. A power supply system (10)

having a converter (12) for the generation of a switched converter output voltage ($U_w$),
having a transformer (14), which on the primary side is fed by the converter (12) and has a load output (24) connected to its secondary side,
having at least one resonant capacitance ($C_r$), which forms a resonant arrangement with a leakage inductance ($L_r$) of the transformer (14) and/or an external inductance,
and a measuring device (16) for determining operating parameters of the power supply system (10),
the measuring device (16) having a current sensor (22) for measuring the current ($i_r$) on the primary side of the transformer (14)
and means for controlling the converter (12),

**characterized in that**
the measuring device (16) is designed so that it activates the converter (12) so that

with initially unenergized components of the power supply system (10), a predetermined converter output voltage ($U_w$) is generated,
one or more parameters ($f_0$, $Z_0$, $C_r$, $L_r$) characteristic of the resonant arrangement being determined from the measurement of the current ($i_r$) on the primary side of the transformer (14).

2. A power supply system as claimed in claim 1, in which the measuring device (16) is designed so that the converter output voltage ($U_w$) is switched off after a brief excitation interval.

3. A power supply system as claimed in claim 1 or 2, in which the measuring device is designed so that it determines the resonant frequency ($f_0$) by calculating at least one period of time between two zero crossings of the current ($i_r$) from sample values of the current ($i_r$).

4. A power supply system as claimed in claim 1 or 2, in which the measuring device is designed so that it determines the resonant frequency ($f_0$) by adjusting a sine function on the basis of sample values of the current ($i_r$), a degree of error being minimized.

5. A power supply system as claimed in one of the preceding claims, in which the measuring device 16 is designed so that it determines the amplitude ($I_P$) of the current ($i_r$)..

6. A power supply system as claimed in claim 5, in which the measuring device is designed so that it calculates the amplitude ($I_P$) of the current ($i_r$), by determining a maximum or minimum from sample values of the current ($i_r$).

7. A power supply system as claimed in claim 5, in which the measuring device (16) is designed so that it determines the amplitude ($I_P$) of the current ($i_r$) by matching a sine function to sample values of the current ($i_r$).

8. A power supply system as claimed in one of the preceding claims, in which a rectifier and/or at least one smoothing capacitor are provided as additional components on the secondary side.

9. A power supply system as claimed in one of the preceding claims, in which

- a control device is provided for controlling the output voltage ($U_a$),
- the control uses the calculated parameters ($f_0$, $Z_0$, $C_r$, $L_r$) characteristic of the resonant arrangement.

**10.** An X-ray unit having a power supply system according to one of the preceding claims.

**11.** A method for determining operating parameters of a power supply system (10), in which the power supply system (10) has a converter (12) for generating a converter output voltage ($U_w$), a transformer (14) supplied thereby, the leakage inductance ($L_r$) of which transformer (14) and/or an external inductance with a resonant capacitance ($C_r$) form a resonant arrangement, and has a load output (24), which is connected to the secondary side of the transformer (14), **characterized by** the following stages

- it is first ensured that the components of the power supply system (10) are unenergized,
- the converter (12) is then activated so that a predetermined converter output voltage ($U_W$) is generated at least for a brief excitation interval,
- the current ($i_r$) appearing on the primary side of the transformer(14) is measured at least during the excitation interval
- and one or more parameters characteristic of the resonant arrangement are determined from the measurement of the current ($i_r$).

**Revendications**

**1.** Système d'alimentation électrique (10)

- avec un convertisseur (12) pour la production d'une tension de sortie de convertisseur ($U_w$) commutée,
- avec un transformateur (14) qui est alimenté côté primaire par le convertisseur (12) et au côté secondaire duquel est reliée une sortie de charge (24),
- avec au moins une capacité de résonance ($C_r$) qui forme un dispositif de résonance avec une inductance de fuite ($L_r$) du transformateur (14) et/ou une inductance externe,
- et un dispositif de mesure (16) pour la détermination de paramètres de fonctionnement du système d'alimentation électrique (10),
- le dispositif de mesure (16) présentant un capteur de courant (22) pour la mesure du courant ($i_r$) du côté primaire du transformateur (14)
- et des moyens pour la commande du convertisseur (12)

**caractérisé en ce**

- **que** le dispositif de mesure (16) est conçu de telle sorte qu'il commande le convertisseur (12) de telle sorte
- **qu'**une tension de sortie du convertisseur ($U_w$) préalablement déterminée soit produite pour les composants initialement sans énergie du système d'alimentation électrique (10),
- un ou plusieurs paramètres caractérisants ($f_0$, $Z_0$, $C_r$, $L_r$) étant déterminés à partir de la mesure du courant ($i_r$) du côté primaire du transformateur (14).

**2.** Système d'alimentation selon la revendication 1, dans lequel le dispositif de mesure (16) est conçu de telle sorte que la tension de sortie du convertisseur (Uw) soit désactivée après un court intervalle d'excitation.

**3.** Système d'alimentation électrique selon l'une des revendications 1 ou 2, dans lequel le dispositif de mesure est conçu de telle sorte qu'il détermine la fréquence de résonance ($f_0$) en déterminant au moins une durée entre deux passages par zéro du courant ($i_r$) à partir des valeurs de balayage du courant ($i_r$).

**4.** Système d'alimentation électrique selon l'une des revendications 1 ou 2, dans lequel le dispositif de mesure et conçu de manière à déterminer la fréquence de résonance ($f_0$) en adaptant une fonction sinusoïdale à partir des valeurs de balayage du courant ($I_r$), une mesure d'erreur étant minimisée.

**5.** Système d'alimentation électrique selon l'une des revendications précédentes, dans lequel le dispositif de mesure (16) est conçu de manière à déterminer l'amplitude ($I_P$) du courant ($i_r$).

**6.** Système d'alimentation électrique selon la revendication 5, dans lequel le dispositif de mesure est conçu de manière à déterminer l'amplitude ($I_P$) du courant ($i_r$) en déterminant un maximum ou un minimum des valeurs de balayage du courant ($i_r$).

7. Système d'alimentation électrique selon la revendication 5, dans lequel le dispositif de mesure (16) est conçu de manière à déterminer l'amplitude ($I_P$) du courant ($i_r$) en adaptant une fonction sinusoïdale aux valeurs de balayage du courant ($I_r$).

8. Système d'alimentation électrique selon l'une des revendications précédentes dans lequel

   - un redresseur et/ou au moins une capacité de lissage sont prévus côté secondaire comme composants supplémentaires.

9. Système d'alimentation électrique selon l'une des revendications précédentes dans lequel :

   - un dispositif de réglage est prévu pour le réglage de la tension de sortie ($U_a$),
   - le réglage utilisant les paramètres ($f_0$, $Z_0$, $C_r$, $L_r$) caractérisant le dispositif de résonance déterminé.

10. Appareil radiographique avec un système d'alimentation électrique selon l'une des revendications précédentes.

11. Procédé de détermination de paramètres d'exploitation d'un système d'alimentation électrique (10),

   - le système d'alimentation électrique (10) présentant un convertisseur (12) pour la production d'une tension de sortie du convertisseur ($U_w$), un transformateur (14) alimenté par celle-ci, dont l'inductance de fuite ($L_r$) et/ou une inductance externe forme avec une capacité de résonance ($C_r$) un dispositif de résonance et présente une sortie de charge (24) qui est reliée au côté secondaire du transformateur (14),

   **caractérisé par** les étapes suivantes

   - d'abord on s'assure que les composants du système d'alimentation électrique (10) sont sans énergie,
   - ensuite le convertisseur (12) est commandé de telle sorte qu'une tension de sortie du convertisseur ($U_w$) préalablement déterminée soit produite pendant au moins un court intervalle d'excitation,
   - le courant ($i_r$) qui s'installe est mesuré du côté primaire du transformateur (14) au moins pendant l'intervalle d'excitation et, à partir de la mesure du courant ($i_r$), un ou plusieurs des paramètres caractérisant le dispositif de résonance sont déterminés.

FIG. 1

14

FIG. 2

EP 1 258 978 B1

FIG. 3

FIG. 4

FIG. 5

FIG. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 884830 A

- DE 19940137

### In der Beschreibung aufgeführte Nicht-Patentliteratur

- Fast estimation of unknown resonant frequencies by means of the VeCon chip set. *EPE'97 Trondheim,* 1997, vol. 3, 353-357